# EUROPEAN PATENT APPLICATION

(11) **EP 4 843 838 A1**
(43) Date of publication of application: **25.11.2026**
(21) Application number: 25177194.5
(22) Date of filing: 19.05.2025
(51) Int. Cl.: B60R 16/02

(54) **AN INSULATING INSERT CONFIGURED TO BE INSERTED INTO AN ELECTRICALLY CONDUCTIVE PART OF A VEHICLE**

(71) Applicant: Volvo Truck Corporation, 405 08 Göteborg (SE)
(72) Inventor: STERNING, Åke, 412 79 Göteborg (SE); RAKESH RAJPUT, Maulik, 412 80 Göteborg (SE)
(74) Representative: Zacco Sweden AB

(57) **Abstract**

There is disclosed an insulating insert configured to be inserted into an electrically conductive part of a vehicle for enabling a busbar to become fastened to the electrically conductive part via the insulating insert. The insulating insert comprises a fixating part made of an electrically insulating material, and a central shaft part being partly embedded in and fixated by the fixating part. The central shaft part has a distal portion which is embedded in and fixated by the fixating part, and a proximal non-embedded portion which extends from the embedded distal portion in a proximal direction away from the fixating part. The proximal non-embedded portion of the central shaft part has a proximally facing surface which is configured to support a busbar.

## Description

### TECHNICAL FIELD

The disclosure relates generally to an insulating insert. In particular aspects, the disclosure relates to an insulating inert configured to be inserted into an electrically conductive part of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Fixation for busbars in vehicles, such as in electric heavy-duty vehicles, experience demanding loads during operations. There are various mechanical arrangements designed to handle such loads. However, when it comes to combining such mechanical arrangement with electrical requirements and tight packaging, it becomes much more challenging. For instance, traction voltage may imply problems such as creepage, clearance and dielectric breakdown (electric material penetration) which need to be solved to avoid short-circuiting the vehicle, and the risk of ensuing critical failure. There is thus still room for technical improvement within the vehicle industry.

### SUMMARY

According to a first aspect of the disclosure, there is provided an insulating insert configured to be inserted into an electrically conductive part of a vehicle for enabling a busbar to become fastened to the electrically conductive part via the insulating insert, the insulating insert comprising:
- a fixating part made of an electrically insulating material, and
- a central shaft part being partly embedded in and fixated by the fixating part,

wherein the central shaft part has a distal portion which is embedded in and fixated by the fixating part, and a proximal non-embedded portion which extends from the embedded distal portion in a proximal direction away from the fixating part,
wherein the proximal non-embedded portion of the central shaft part has a proximally facing surface which is configured to support a busbar. The first aspect of the disclosure may seek to enable the fastening of a busbar (high voltage conductors) to an electrically conductive part of a vehicle while reducing the risk of electricity leakage, creeping and arcing between the conductors. A technical benefit may include that by providing a fixating part of an electrically insulating material, such risk reduction may be achieved even though the partly embedded central shaft supports high voltage conductors in the form of a busbar. Furthermore, a compact yet effectively insulating solution may be obtainable. The fixating part will not only function as an insulation between the central shaft part and the electrically conductive part to which the busbar is to be operatively connected, but the fixating part may, due to its fixating function, also enable endurance of demanding loads from, for example, environments of shock and vibration. The insulating insert, in particular, the fixating part of the insulating insert, may suitably be inserted into a matching cavity of the electrically conductive part to which the busbar is to be connected. Hereby, the busbar may be arranged close to the electrically conductive part, while being electrically insulated from the electrically conductive part.

In this disclosure terms such as proximal/proximally and distal/distally are used. As should be understood from above, the busbar, when supported by the insulating insert, will be located proximally of the electrically conductive part to which it is operatively connected. The insulating insert will normally be moved in a distal direction when inserted into, for example, a mating cavity of the electrically conductive part. If the insulating insert is placed on hypothetical horizontal base surface, such that the fixating part rests on the horizontal base surface and the central shaft part projects upwardly from the fixating part, then in such case the proximal direction would coincide with the upwards direction, and the distal direction would coincide with the downwards direction, However, since in practical implementation, it would be conceivable to mount the insulating insert in any orientation in space, it is in this disclosure considered more appropriate to refer to the directions as "proximal" and "distal".

It should be noted that the fact that the proximal non-embedded portion of the central shaft part has a proximally facing surface which is configured to support a busbar, does not necessarily mean that the proximally facing surface must be in direct contact with the busbar. For instance, there may be a washer which is sandwiched between the busbar and the proximally facing surface. In either case, irrespective of the busbar contacting the proximally facing surface directly or there being a washer present in-between, the busbar will be supported by the proximally facing surface.

The electrically conductive part of the vehicle to which the busbar is to become fastened by means of the insulating insert may, for instance, be a cast aluminum body of the vehicle.

Optionally in some examples, including in at least one preferred example, the central shaft part may have its main direction of extension in an axial direction, both proximally and distally, wherein the distal portion of the central shaft part may comprises a radially extending anchoring section, wherein the distal portion of the central shaft part may embedded in the fixating part in such a way that electrically insulating material of the fixating part is present proximally of the radially extending anchoring section. A technical benefit may include that the central shaft part may hereby be firmly fixated by the fixating part, counteracting proximally directed pulling forces, thus further improving the robustness and mechanical resistance to demanding loads. The radially extending anchoring section may suitably be located at or near the distal end of said distal portion, so as to allow for much insulating material to be located proximally of the anchoring section, for good anchorage. It should be understood that there may be more than one anchoring section. For instance, there may be two or more anchoring sections distributed around the circumference of the distal portion of the central shaft part, and/or there may be two or more anchoring sections distributed along the axial length of the distal portion of the central shaft part.

Optionally in some examples, including in at least one preferred example, the central shaft part may be configured to form part of a screw joint, wherein the central shaft part may be configured to receive another part of the screw joint, such as a bolt or a nut, so as to allow the busbar to be clamped between said another part of the screw joint and said proximally facing surface. A technical benefit may include that a strong clamping force may be achieved, resulting in a high stiffness, and may reduce the loss of residual torque. Such clamping may, similar to the previous discussion, be achieved with or without a washer sandwiched between the busbar and said proximally facing surface. Although a screw joint is advantageous for achieving high stiffness, other ways of securing the busbar to the central shaft portion may be conceivable. For instance, in some examples, the central shaft part may be in the form of, or comprise, a metal stud (for example, a copper stud) to which the busbar may be welded so as to secure the busbar.

Optionally in some examples, including in at least one preferred example, the central shaft part may comprise a blind bore having a proximal open end and a distal closed end, wherein the blind bore is provided with internal threading and is configured to receive through said proximal open end a bolt provided with mating external threading, so as to allow the busbar to be clamped between a head of the bolt and said proximally facing surface. Similarly to the above example, a technical benefit of this example may include that a strong clamping force may be achieved, resulting in a high stiffness, and may reduce the loss of residual torque. Furthermore, a bolt may have a relatively long axial thread length along its shaft, further improving the securing.

Optionally in some examples, including in at least one preferred example, an enveloping surface of the proximal non-embedded portion of the central shaft part may be provided with external threading located proximally of said proximally facing surface, wherein the external threading is configured to receive a nut provided with mating internal threading, so as to allow the busbar to be clamped between the nut and said proximally facing surface. Similarly to the above examples, a technical benefit of this example may include that a strong clamping force may be achieved, resulting in a high stiffness, and may reduce the loss of residual torque.

Optionally in some examples, including in at least one preferred example, the central shaft part may be made in one piece. A technical benefit may include that fewer components may be needed, thus the insulating insert may be achieved in a cost and time efficient manner. It should, however, be understood that in at least some examples it is conceivable to have a central shaft part formed by more than one component. For example, in some examples, the central shaft part may have one component part in the form of a bolt, wherein a part of the bolt shaft is surrounded by a long nut which forms another component part. The head of the bolt, a portion of the bolt shaft and a portion of the long nut may be embedded in the fixating part (thus together forming the distal portion of the central shaft part). The remaining portion of the bolt shaft and the long nut may form the proximal non-embedded portion of the central shaft. The proximal end of the long nut may present said proximally facing surface. A smaller nut may then be threaded onto the free end of the bolt shaft to clamp a busbar between the smaller nut and said proximally facing surface formed by the long nut.

Optionally in some examples, including in at least one preferred example, the insulating insert may be configured to receive a piece of thermal interface material (TIM piece) provided with a hole such that a proximally directed surface of the fixating part contacts the TIM piece and such that the proximal non-embedded portion of the central shaft part extends inside the hole of the TIM piece and is circumferentially surrounded by the TIM piece, wherein said proximally facing surface of the proximal non-embedded portion may be configured to support a busbar such that the busbar becomes arranged proximally of the received TIM piece. A technical benefit may include that an appropriately dimensioned TIM piece may be selected for thermal and/or insulation control, while allowing for high residual torque and clamping force to be maintained. While traditional clamping solutions for busbars may also use a thermal interface material, such clamping solutions may rely on reaction force of the thermal interface material (which is often a soft polymer, and different polymers behave differently, for example some may relax over time). This in turn results in lost residual torque on the joint (e.g. on a bolt) over time. By selecting a TIM piece which is appropriately dimensioned so as not to interfere with the clamping force between a bolt or nut that cooperates with said proximally facing surface, the TIM piece will not be subjected to the prior art deterioration, nor will it negatively affect the residual torque and the clamping force over time.

By providing a differentiation in proximal level, such as a stepped solution, for a received TIM piece and the busbar, the risk of the busbar pressing and deforming the TIM piece may be avoided. This is at least partly reflected in the example below.

Optionally in some examples, including in at least one preferred example, the proximal non-embedded portion may have a first section configured to extend inside the hole of the TIM piece and to be circumferentially surrounded by the TIM piece, and a second section configured to extend inside of a hole of the busbar supported by said proximally facing surface of the proximal non-embedded portion, wherein the first section is located distally of, and is wider than, the second section. A technical benefit may include that the integrity of the TIM piece can be maintained (thus, maintaining any insulating and thermal control functionality) and that the clamping force exerted on the busbar can be independent of the presence or non-presence of a TIM piece. The first section (distal and wide) may, together with the second section (proximal and narrow), form a ledge. Such a ledge may thus present said proximally facing surface for supporting the busbar. The ledge may suitably extend from a proximal end of the enveloping surface of the first section to a distal end of the enveloping surface of the second section. In other words, the ledge may suitably interconnect the first and second sections. The axial length of the first section, i.e. the axial distance between the ledge (proximally facing surface of the proximal non-embedded portion) and the proximally directed surface of the fixating part, may suitably be dimensioned so that a TIM piece can be selected whose thickness is equal to or smaller than said axial length, whereby it is possible to avoid relying on reaction forces from the TIM piece when clamping the busbar.

Optionally in some examples, including in at least one preferred example, the distal portion of the central shaft part may comprise radially extending fin sections presenting planar torque-transmitting surfaces extending in proximal-distal directions inside the fixating part, wherein a torque applied to the proximal non-embedded portion may be transmitted by the radially extending fin sections to the fixating part. A technical benefit may include that the insulating insert may be conveniently inserted into for example a mating cavity of the electrically conductive part of the vehicle. As will be discussed in other examples below, the insulating insert may for instance be screwed into a mating cavity by means of mutually cooperating threads. The embedded torque-transmitting surfaces enable a convenient torque transfer to take place when a person applies a torque to the proximal non-embedded portion of the central shaft part, allowing the insulating insert to be easily screwed into place. It should, however, be noted that in other examples the insulating insert may not necessarily be secured by screwing but could for example be welded to the electrically conductive part of the vehicle in which the insulating insert is inserted.

Optionally in some examples, including in at least one preferred example, the proximal non-embedded portion of the central shaft part may comprise a tool-engaging section for enabling a tool to be engaged for screwing the insulating insert into an electrically conductive part of the vehicle. A technical benefit may include that this facilitates the installation of the insulating insert before a busbar is mounted to the central shaft part. The tool-engaging section may be designed with any appropriate configuration or cross-section. For example, it may be polygonal (such as hexagonal) or it may be star-shaped. **In** other examples the insulating insert could be installed without using a tool, for example, by simply placing it by hand in a mating cavity of the electrically conductive part of the vehicle (such as screwing the insulating insert by hand).

Optionally in some examples, including in at least one preferred example, the insulating insert may have a threaded cylindrical enveloping surface for enabling the insulating insert to be screwed into a threaded cavity of an electrically conductive part of a vehicle. A technical benefit may include that a screw connection between the insulating insert and such a cavity may provide a robust installation, withstanding loads that the insulating insert may be subjected to during operation of the vehicle.

Optionally in some examples, including in at least one preferred example, said threaded cylindrical enveloping surface may be a threaded cylindrical enveloping surface of the fixating part. A technical benefit may include that no additional components are necessary to form the insulating insert apart from the fixating part and the central shaft part. The fixating part may thus conveniently be threaded into place in a mating threaded cavity of the electrically conductive part of the vehicle.

Optionally in some examples, including in at least one preferred example, the insulating insert may further comprise a cup-shaped socket, wherein the fixating part is provided in and fixated to the socket, wherein the proximal non-embedded portion projects proximally beyond a proximal end of the socket. A technical benefit may include that a material may be selected for the socket which may provide an even better securing of the insulating insert to the electrically conductive part of the vehicle. For instance, the socket may, in some examples, be of metal, such as aluminum. Even though the socket may be electrically conductive there will be no electricity leaking to the socket from the busbar and/or central shaft part since the fixating part embedding the central shaft part provides electrical insulation. The fixating part may for example be injection molded into the socket. In at least some examples the socket may be welded to the electrically conductive part of the vehicle, such as to walls of a cavity receiving the insulating insert. In other examples the socket may instead be screwed into such a cavity. This is at least partly reflected in the following example.

Optionally in some examples, including in at least one preferred example, said threaded cylindrical enveloping surface may be a threaded cylindrical enveloping surface of the socket. A technical benefit may include that a robust material (conductive or non/conductive) may be used for providing the external threads of the insulating insert. For instance, a metal-to-metal screw connection may be achieved (for example an aluminum socket may have external threads engaging internal threads of a cavity in a cast aluminum body of the vehicle.

Optionally in some examples, including in at least one preferred example, the electrically insulating material of the fixating part may be a resin or a plastic material. In some examples, it may be reinforced with fibers, such as glass fibers. A technical benefit may include that such materials are readily available and have both insulating and fixating capabilities.

Optionally in some examples, including in at least one preferred example, the electrically insulating material of the fixating part may be injection molded onto the distal portion of the central shaft part. A technical benefit may include that injection molding provides an efficient manner of producing the fixating part of the insulating insert, while achieving the desired insulating and fixating functionality of the fixating part.

Optionally in some examples, including in at least one preferred example, the central shaft part may be made of metal. A technical benefit may include that a metal part may allow for a robust clamping of the busbar to the central shaft (for example in case of a screw joint). However, another technical benefit may be that a busbar may (instead of using a screw joint) be welded to a central shaft part made of metal. This latter benefit is reflected in the following example.

Optionally in some examples, including in at least one preferred example, the central shaft part is formed by a metal stud, such as a copper stud, to which a busbar may be welded.

Optionally in some examples, including in at least one preferred example, the distal portion of the central shaft part is embedded in the fixating part in such a way that the electrically insulating material of the fixating part is present both circumferentially and distally of the distal portion of the central shaft part. A technical benefit may include that the distal portion is well stabilized and insulated in the electrically insulating material of the fixating part. For instance, if the insulating insert also comprises a metal socket in which the fixating part is provided, the central shaft part will not be in contact with the metal socket but will in all relevant directions be surrounded by the electrically insulated material of the fixating part.

According to a second aspect of the disclosure, there is provided a vehicle comprising the insulating insert according to the first aspect, including any example thereof. The second aspect of the disclosure may seek to address similar issues and provide similar technical benefits as those discussed in relation to the insulating insert of the first aspect (including any example thereof).

According to a third aspect of the disclosure, there is provided an insulating insert arrangement, comprising:
- the insulating insert according to the first aspect (including any example thereof), and
- a joint part, such as a bolt or a nut,
wherein the central shaft part is configured to receive the joint part to form a screw joint, so as to allow the busbar to be clamped between said joint part and said proximally facing surface.
The third aspect of the disclosure may seek to address similar issues and provide similar technical benefits as those discussed in relation to the insulating insert of the first aspect (including any example thereof).

According to a fourth aspect of the disclosure, there is provided a vehicle comprising the insulating insert arrangement according to the third aspect, including any example thereof.
The fourth aspect of the disclosure may seek to address similar issues and provide similar technical benefits as those discussed in relation to the insulating insert of the first aspect (including any example thereof).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a heavy-duty vehicle according to one example of this disclosure.
**FIGS. 2A-2C** schematically illustrate an insulating insert according to one example of this disclosure.
**FIGS. 3A-3B** schematically illustrate an internal geometry of a fixating part which may form part of an insulating insert, in accordance with one example of this disclosure.
**FIGS. 4A-4C** schematically illustrate an insulating insert according to another example of this disclosure.
**FIGS. 5A-5I** schematically illustrate a sequence of steps for fastening a busbar to an electrically conductive part of a vehicle via an insulating insert, in accordance with one example of this disclosure.
**FIGS. 6A-6I** schematically illustrate a sequence of steps for fastening a busbar to an electrically conductive part of a vehicle via an insulating insert, in accordance with another example of this disclosure.
**FIG. 7** is a very schematic illustration of an insulating insert according to yet another example of this disclosure.

### DETAILED DESCRIPTION

The detailed description set forth below provides information and examples of the disclosed technology with sufficient detail to enable those skilled in the art to practice the disclosure.

Busbars in vehicles, such as heavy-duty vehicles, may be subjected to high loads, such as thermal loads, shocks, vibrations, etc. It is therefore desirable to secure them in a mechanically robust manner. The structures to which the busbars are secured are often made of electrically conductive material, for example cast aluminum structures. Therefore, not only mechanical considerations should be taken into account, but also electrical considerations. Potential issues such as creepage, clearance and dielectric breakdown, short-circuiting, etc. are highly desirable to avoid. The insulating insert of the present disclosure allows for both a robust mechanical securing of the busbar to an electrically conductive part of a vehicle, and an electrically secure connection by electrically insulating the busbar from the electrically conductive part of the vehicle.

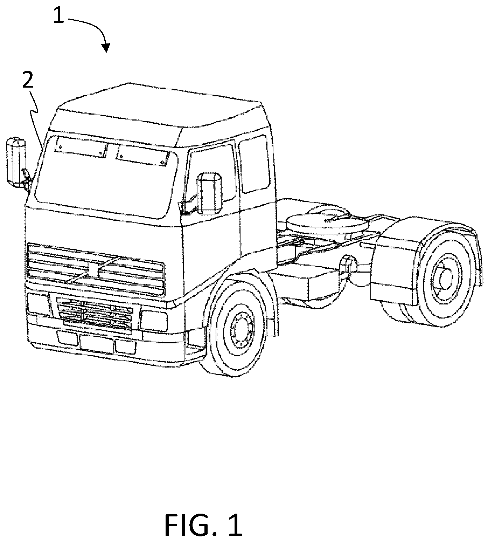

**FIG. 1** schematically illustrates a heavy-duty vehicle **1** according to one example of this disclosure. The exemplary illustration in **FIG. 1** shows a tractor unit for towing a trailer unit (not shown), which together make up a semitrailer vehicle. However, the teachings of this disclosure are applicable to other types of heavy-duty vehicles as well. For instance, the heavy-duty vehicle may be a different type of heavy-duty vehicle for cargo transport, such as a truck, or a truck with a dolly unit arranged to tow a trailer unit, etc. Other conceivable examples include a bus, construction equipment, etc. The heavy-duty vehicle **1** may, for instance, be an electric vehicle or a hybrid electric vehicle. The illustrated heavy-duty vehicle **1** comprises a cabin **2** in which a driver may operate the heavy-duty vehicle 1. However, in other exemplary embodiments the heavy-duty vehicle **1** may be an autonomous, i.e., self-driving, heavy-duty vehicle.

The heavy-duty vehicle **1** may comprise an insulating insert as disclosed herein (including any example thereof).

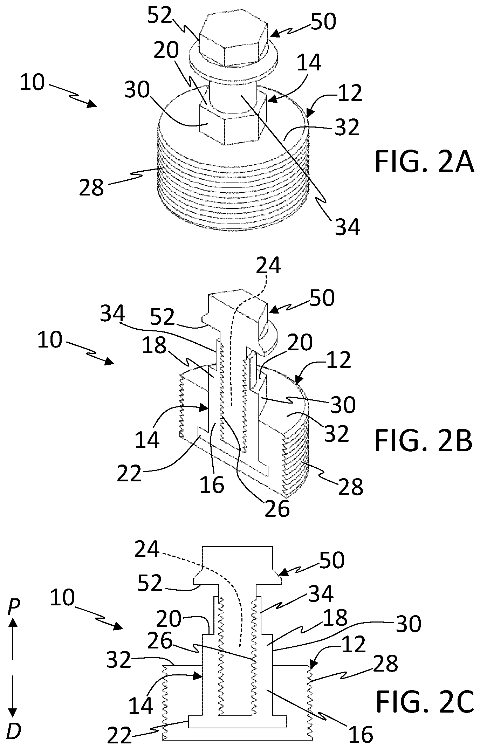

**FIGS. 2A-2C** schematically illustrate an insulating insert **10** according to one example of this disclosure. **FIG. 2A** illustrates the insulating insert **10** in a perspective view. **FIG. 2B** illustrates the insulating insert **10** in a cross-sectional perspective view. **FIG. 2C** illustrates the insulating insert **10** in a purely cross-sectional view.

As illustrated in **FIGS. 2A-2C****,** the insulating insert 10 comprises a fixating part **12** made of an electrically insulating material. The insulating insert 10 also comprises a central shaft part **14** which is partly embedded in and fixated by the fixating part **12.** **FIGS. 2A-2C** also illustrates a bolt **50** which has been engaged with the central shaft part **14.** The bolt **50** does not form part of the insulating insert **10** as such. However, in some aspects of this disclosure there may be provided an insulating insert arrangement comprising an insulating insert (such as the insulating insert **10** in **FIGS. 2A-2C**) and a joint part (such as the bolt **50** in **FIGS. 2A-2C**).

**In** **FIG. 2C** the proximal direction ***P*** and the distal direction ***D*** have been indicated. As can be understood from **FIGS. 2B-2C****,** the central shaft part **14** has a distal portion **16** which is embedded in and fixed by the fixating part **12,** and a proximal non-embedded portion **18** which extends from the embedded distal portion **16** in the proximal direction ***P*** away from the fixating part **12.** The proximal non-embedded portion **18** of the central shaft part **14** has a proximally facing surface **20** which is configured to support a busbar.

As mentioned above, the bolt **50** does not form part of the actual insulating insert **10,** but may together with the insulating insert **10** form part of an insulating insert arrangement. In general terms, such an insulating insert arrangement may comprise an insulating insert according to this disclosure (including any example thereof, such as the insulating insert **10** in **FIGS. 2A-2C**) and a joint part (such as a bolt or a nut, for example the bolt **50** in **FIGS. 2A-2C**), wherein the central shaft part **14** is configured to receive said joint part to form a screw joint, so as to allow the busbar to be clamped between said joint part and said proximally facing surface **20.**

As explained above, the proximally facing surface **20** is configured to support a busbar which may be clamped between the proximally facing surface **20** and the bolt **50** (more specifically the flanged head **52** of the bolt). It should, however, be understood, that such supporting and clamping functionality does not require direct contact between the busbar and the proximally facing surface **20.** Indeed, in at least some examples, a washer may be placed on the proximally facing surface **20.** Such a washer may thus be sandwiched between the busbar and the proximally facing surface **20.** Accordingly, it should be understood that the busbar will be supported by the proximally facing surface **20** and may be clamped by the proximally facing surface **20,** irrespective of a washer being present or not.

The fixating part **12** may be made of a resin or plastic material. It may be reinforced with fibers, such as glass fibers. The fixating part **20** may be formed by injection molding onto the distal portion **16** of the central shaft part **14.** The central shaft part **14** may suitably be made of metal.

The central shaft part **14** may have its main direction of extension in an axial direction (which corresponds to the proximal and/or distal directions ***P**, **D***)*.* As can be seen in **FIGS. 2B** and **2C****,** the distal portion **16** of the central shaft part **14** may comprise a radially extending anchoring section **22.** The distal portion **16** of the central shaft part **14** can thus be embedded in the fixating part **12** in such a way that electrically insulating material of the fixating part **12** is present proximally of the radially extending anchoring section **22.** Hereby, a strong anchoring/securing of the central shaft part **14** may be achieved. As can also be seen in **FIGS. 2B** and **2C****,** the embedded distal portion **16** of the central shaft part **14** may be embedded in the fixating part **12** in such a way that the electrically insulating material of the fixating part **12** is present both circumferentially and distally of the distal portion **16** of the central shaft part **14.** Hereby, the distal portion **16** of the central shaft part **14** can be well insulated from any surrounding electrically conductive part of the vehicle to which the insulating insert **10** is to be installed. If desired, however, it would be conceivable during manufacturing to let the central shaft part **14** touch a bottom of a molding tool such that the distal end of the central shaft part **14** becomes flush with the distal end of the fixating part **12.** In such case an additional insulating layer/part/plate should be added to the distal end of the central shaft part **14,** either by using the same material as in the fixating part **12** or a different insulating material.

As can be seen in **FIGS. 2B** and **2C****,** the central shaft part **14** may comprise a blind bore **24** having a proximal open end and a distal closed end. The blind bore **24** may be provided with internal threading **26.** The bolt **50,** which may be provided with mating external threading, may thus be inserted at the proximal end of the blind bore **24.** A busbar can then be clamped between the head **52** of the bolt **50** and the proximally facing surface **20** by tightening the bolt **50.**

In the illustrated example of **FIGS. 2A-2C****,** the central shaft part **14** is made in one piece. It should, however, be understood that in other examples of an insulating insert of this disclosure, the central shaft part may be made from two or more pieces mounted to each other.

As can be seen in **FIGS. 2A-2C****,** the insulating insert **10** may have a threaded cylindrical enveloping surface **28.** In this example, the threading is formed in the actual electrically insulating material. The insulating insert **10** may be inserted into a correspondingly threaded cavity of an electrically conductive part of a vehicle. Thus, the threading on the cylindrical enveloping surface **28** can engage the threading of such a cavity and the insulating insert **10** can be screwed into secure engagement in the cavity. In **FIG. 2A** it is illustrated that the proximal non-embedded portion **18** of the central shaft **14** may comprise a tool-engaging section **30** for enabling engagement by a tool for screwing/tightening the insulating insert **10** into an electrically conductive part of the vehicle. Here, the tool-engaging section **30** is illustrated as a hexagonal section tool-engaging section **30,** however, other shapes are conceivable (for example, other polygonal shapes, star-shapes, etc.).

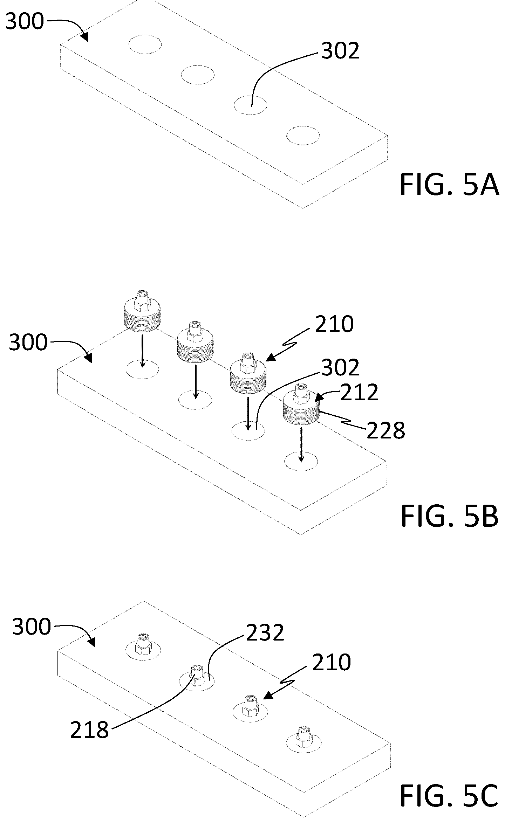

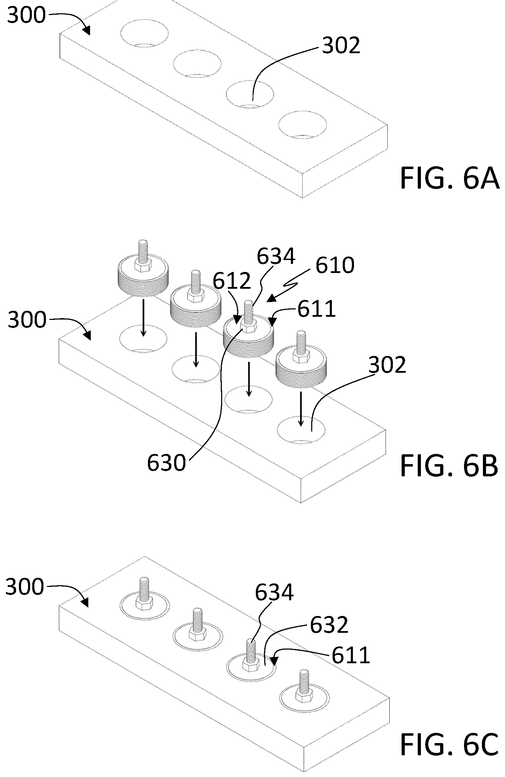

As will be discussed in more detail in relation to the sequential steps shown in **FIGS. 5A-5I** and in **FIGS. 6A-6I****,** the insulating insert **10** in **FIGS. 2A-2C** may be configured to receive a piece of thermal interface material (hereinafter referred to as a "TIM piece"). Although a TIM piece may not be necessary, it may be advantageous to provide such a TIM piece between the busbar and the electrically conductive part of the vehicle. The TIM piece may have a temperature controlling function and also an electrically insulating function. The TIM piece may suitably be placed onto a proximally directed surface **32** of the fixating part **12.** The TIM piece may have a hole, wherein the proximal non-embedded portion **18** of the central shaft part **14** may extend inside the hole of the TIM piece that has then been placed on the proximally directed surface **32** of the fixating part **12** so that the proximal non-embedded portion **18** becomes circumferentially surrounded by the TIM piece. The proximally facing surface **20** of the central shaft part **14** may thus be configured to support a busbar such that the busbar becomes arranged proximally of the received TIM piece.

As can be seen in **FIGS. 2A-2C****,** the tool-engaging section **30** can be regarded as a first section **30** of the proximal non-embedded portion **18.** The proximal non-embedded portion **18** also comprises a second section **34.** The first section **30** is located distally of the second section **34.** Furthermore, the first section **30** is wider than the second section **34.** Thus, it can be understood that the first section **30** may suitably extend inside the hole of the TIM piece and be circumferentially surrounded by the TIM piece, whereas the second section **34** may instead extend inside a hole of the busbar which is supported by the proximally facing surface **20** of the proximal non-embedded portion **18** of the central shaft part **14.** The first and second sections **30, 34** thus present two different levels in the proximal direction ***P*,** and said proximally facing surface **20** (for supporting the busbar) is proximally spaced from said proximally directed surface **32** (for receiving the TIM piece). The proximally facing surface **20** is in the illustrated example formed by a ledge which interconnects the enveloping surfaces of the first and second sections **30, 34,** respectively. By selecting the appropriate thickness of the TIM piece, you can avoid relying on reaction forces from the TIM piece when clamping the busbar, and thereby the integrity of the TIM piece can be better maintained and the long-term securing of the busbar improved.

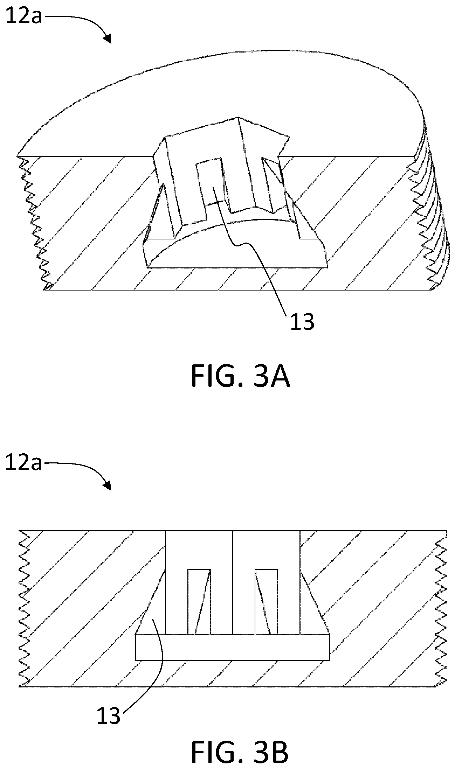

**FIGS. 3A-3B** schematically illustrate an internal geometry of a fixating part **12a** which may form part of an insulating insert, in accordance with one example of this disclosure. It should be understood that these figures are merely included to more clearly illustrate a possible internal geometry and that in practice, the fixating part **12a** should not be produced separately from the central shaft part (rather the fixating part **12a,** may in practice be molded, such as injection molded, onto the central shaft part). As illustrated in FIGS. **3A-****3B,** the internal geometry of the fixating part **12a** presents a plurality of radially extending recesses **13.** The walls defining those recesses **13** may thus have been molded onto and formed around corresponding radially extending structures of the central shaft part, such as radially extending fin sections. As will be discussed in more detail later, such fin sections may be advantageous for transferring a torque applied at the proximal non-embedded portion of the central shaft part to the fixating part **12a.** This in turn facilitates screwing the insulating insert with its threaded cylindrical enveloping surface into an internally threaded cavity of an electrically conductive part of a vehicle.

It should be understood that the internal geometry illustrated in **FIGS. 3A-3B** may be implemented in various examples of the insulating insert of this disclosure. For instance, even through the particular cross-sections shown in **FIGS. 2B** and **2C** do not show the internal geometry of **FIGS. 3A-3B****,** it is fully conceivable to make the insulating insert **10** of **FIGS. 2A-2C** with such an internal geometry (and the central shaft part **14** with correspondingly shaped fin sections). In other words, if the cross sections taken in **FIGS. 2B** and **2C** would have been taken in another direction, they could have revealed such an internal geometry.

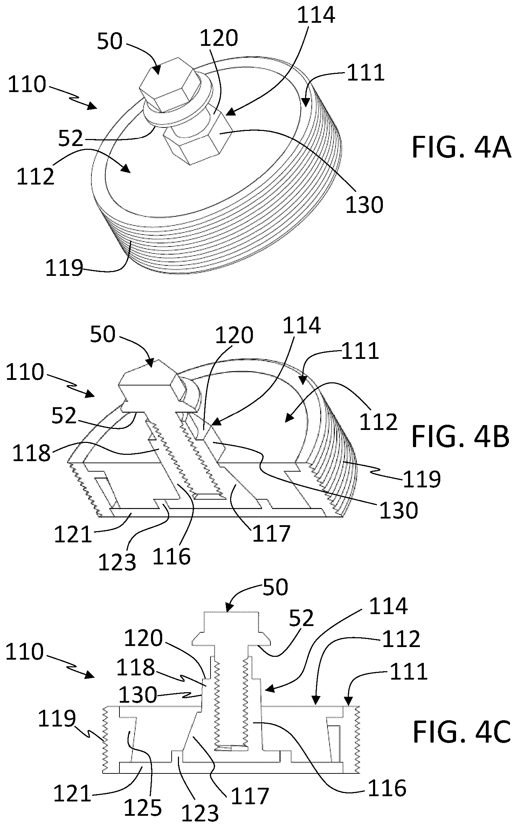

**FIGS. 4A-4C** schematically illustrate an insulating insert **110** according to another example of this disclosure. **FIG. 4A** illustrates the insulating insert **110** in a perspective view. **FIG. 4B** illustrates the insulating insert **110** in a cross-sectional perspective view. **FIG. 4C** illustrates the insulating insert **110** in a purely cross-sectional view.

The insulating insert **110** illustrated in **FIGS. 4A-4C** comprises a cup-shaped socket **111,** in addition to a fixating part **112** and a central shaft part **114.** Similarly to what has been discussed previously, the fixating part **112** is made of an electrically insulating material and a distal portion **116** of the central shaft part **114** is embedded in and fixated by the fixating part **112,** and a proximal non-embedded portion **118** extends from the embedded distal portion **116** in a proximal direction away from the fixating part **112.** Also, as discussed previously, the proximal non-embedded portion **118** of the central shaft part **114** has a proximally facing surface **120** which is configured to support a busbar. Furthermore, as can be seen in the cross-sections of **FIGS. 4B** and **4C****,** the distal portion **116** of the central shaft part **114** may have at least one radially extending fin section **117.** Suitably, there may be several such fin sections **117** distributed in the circumferential direction (for example in line with the distribution of recesses **13** shown in the internal geometry of **FIGS. 3A** and **3B**)**.** The one or more fin sections **117** in the example of FIGS. **4A-4C** may thus present planar torque-transmitting surfaces which extend in proximal-distal directions inside the fixating part **112.** A torque applied to the proximal non-embedded portion **118** (such as a torque applied to a tool-engaging section **130**) may therefore be transmitted by the radially extending fin sections **117** to the fixating part **112.** Similarly, to the fin sections **117** of the central shaft part **114,** the socket **111** may also be provided with torque transmitting fins **125** (see **FIG. 4C**) Since the fixating part **112** is provided in and fixated to the socket **111,** suitably molded to the socket **111,** which may be of any suitable material (even conductive material such as aluminum), the torque will also be transmitted at the fins **125** to the socket **111.** As shown in **FIGS. 4A-4C****,** instead of having the cylindrical enveloping surface of the fixating part **112** provided with threads (such as the fixating part **12** in **FIGS. 2A-2C**), in this example it is the socket **111** that has a threaded cylindrical enveloping surface **119.** Thus, when the insulating insert **110** is to be installed in an internally threaded cavity of an electrically conductive part of a vehicle, torque may be applied to the tool-engaging section **130** of the central shaft part **114.** This torque will via the fin sections **117** and the fixating part **112** be transmitted to the socket **111** which will be screwed into the cavity. Although a threaded engagement allows for a secure installation of the insulating insert **110** to an electrically conductive part of the vehicle, it may be conceivable to instead weld the insulating insert **110** to the electrically conductive part. In such cases, the socket **111** may have a smoother enveloping surface without threading.

In the example illustrated in **FIGS. 4A-4C****,** there is provided an electrically insulating plate **121** with a central guide **123** for aligning the central shaft part **114** in the manufacturing process. When the central shaft part **114** has been placed onto the electrically insulating plate **121** the fixating part **112** may be injection molded onto the central shaft part **114,** the plate **121** and the socket **111.** Instead of having the plate **121,** it is of course conceivable to let the distal portion **116** of the central shaft part **114** be embedded both circumferentially and distally by the fixating part **112,** similarly to the example in **FIGS. 2A-****2C.** In such cases, the plate **121** may be omitted.

Similarly, to the example in **FIGS. 2A-2C****,** the bolt **50** with its flanged head **52** in **FIGS. 4A-4C** does not form part of the actual insulating insert **110,** but may instead be considered as, together with the insulating insert **110,** forming part of an insulating insert arrangement.

**FIGS. 5A-5I** schematically illustrate a sequence of steps for fastening a busbar **500** to an electrically conductive part **300** of a vehicle via an insulating insert **210,** in accordance with one example of this disclosure. The insulating insert **210** may, for instance, correspond to the insulating insert **10** shown in **FIGS. 2A-2C****,** however the general teaching of this sequence may be applied also to other insulating inserts of this disclosure.

Starting with **FIG. 5A****,** there is very schematically illustrated an electrically conductive part **300** of a vehicle, such as a cast aluminum structure (for example part of a box or other component of a vehicle). The electrically conductive part **300** has been provided with a plurality of cavities **302.** Although not visible in **FIG. 5A****,** they may suitably be internally threaded cavities **302.**

In **FIG. 5B****,** a plurality of insulating inserts **210** of this disclosure are inserted into a respective cavity **302.** As illustrated in **FIG. 5B****,** they may have a threaded cylindrical enveloping surface **228** for engaging mating threads of the cavities **302.** The insulating inserts **210** may thus be screwed/tightened into firm engagement with the electrically conductive part **300.** The depth of the cavities **302** may suitably correspond to the height of the fixating part **212** of the insulating inserts **210.**

As illustrated in **FIG. 5C****,** when the insulating inserts **210** have been installed, the proximally directed surface **232** of the fixating part may be substantially flush with the outer surface of the electrically conductive part **300.** The proximal non-embedded portion **218** of the central shaft part projects proximally away from said proximally directed surface **232** of the fixating part.

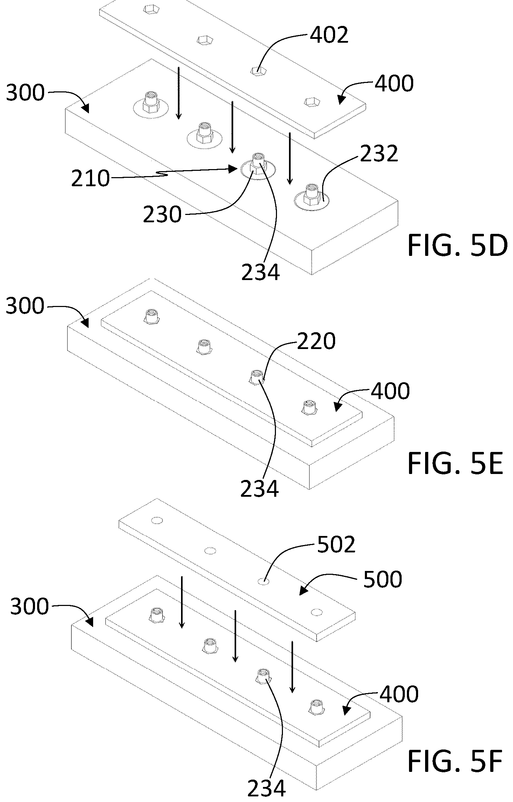

Next, in **FIG. 5D** a TIM piece **400** is schematically illustrated. The TIM piece **400** has hexagonally shaped holes **402.** Each such hexagonally shaped hole **402** matches the hexagonal shape of a tool-engaging section **230** of a respective insulating insert **210.** However, it is not necessary for the holes **402** to have the same shape as the tool-engaging section **230.** Rather, it is the size of the holes **402** that may be more important. The holes **402** should suitably be dimensioned small to reduce the risk of creepage. The tool-engaging section **230** is a first section **230** which is wider than and located distally of a second section **234.** **FIG. 5D** further shows the proximally directed surface **232** of the fixating part of each insulating insert **210,** ready to receive the TIM piece **400.**

In **FIG. 5E** the TIM piece **400** has been received by the proximally directed surface of the fixating part and surrounds the first section (tool-engaging section). The second section **234,** however, protrudes proximally of the first section. Furthermore, the ledge which forms the proximally facing surface **220** of the central shaft part is flush with the TIM piece **400** or it may even be located slightly distally of the TIM piece **400.** The ledge and the proximally facing surface **220** can also be regarded as being formed by a proximal end face of the first section.

In **FIG. 5F** a busbar **500** is schematically illustrated. It has a pattern of holes **502.** The holes **502** match the shape of the second section **234.**

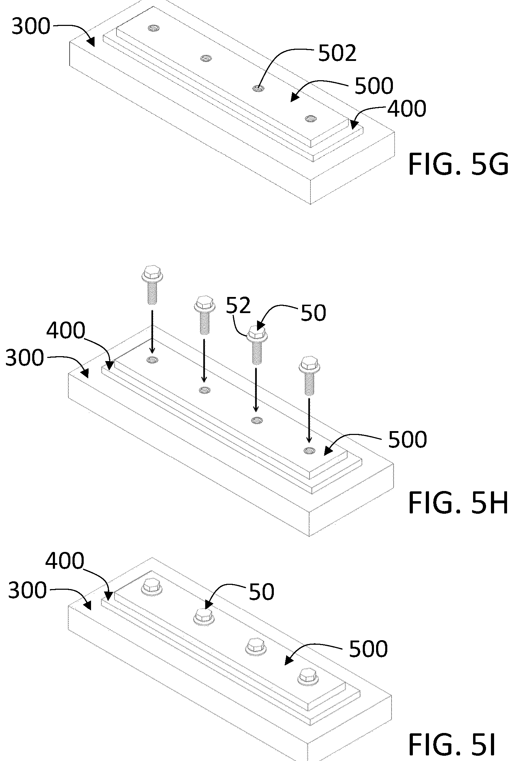

In **FIG. 5G** the busbar **500** has now been received by the proximally facing surface of the central shaft part, such that the second section extends inside a respective hole **502** of the busbar **500.** The dimension of the TIM piece **400** may actually be such that it extends slightly proximally of the ledge, so that it becomes slightly compressed by the busbar **500** for improved heat conductivity (without relying on any reaction force from the TIM piece **400**)**.**

**FIG. 5H** illustrates that a plurality of bolts **50** having flanged heads **52** may be provided for clamping the busbar **500.** Each bolt **50** is threaded and configured to engage a respective insulating insert, in particular configured to engage internal threads of a blind bore of the central shaft part of a respective insulating insert.

In **FIG. 5I**, each bolt **50** has been tightened so that the busbar **500** has been clamped between the flanged head of each bolt **50** and the proximally facing surface of the central shaft part of the respective insulating insert. Hereby, a mechanically robust securing of the busbar **500** to the electrically conductive part **300** has been achieved, while also mitigating any risk of the creepage or other transfer of electricity from the busbar **500** to the electrically conductive part **300.** By means of the design of the insulating insert, the tightening of the bolt **50,** and the friction to the busbar **500** will be is high enough, so that any vibration force during operation of the vehicle will be weaker and inadvertent unscrewing can be avoided.

**FIGS. 6A-6I** schematically illustrate a sequence of steps for fastening a busbar 500 to an electrically conductive part **300** of a vehicle via an insulating insert **610,** in accordance with another example of this disclosure.

Starting with **FIG. 6A****,** there is very schematically illustrated an electrically conductive part **300** of a vehicle, such as a cast aluminum structure (for example part of a box or other component of a vehicle). The electrically conductive part **300** has been provided with a plurality of cavities **302.** Although not visible in **FIG. 6A****,** they may suitably be internally threaded cavities **302.**

In **FIG. 6B****,** a plurality of insulating inserts **610** of this disclosure are inserted into a respective cavity **302.** Each insulating insert **610** may comprise a socket **611** (similarly to the example in **FIGS. 4A**-**4C**). The fixating part **612** is thus fixated in the socket **611.** As illustrated in **FIG. 6B****,** the socket **611** of each insulating insert **610** may have a threaded cylindrical enveloping surface for engaging mating threads of the cavities 302. The insulating inserts **610** may thus be screwed/tightened into firm engagement with the electrically conductive part **300.** The depth of the cavities **302** may suitably correspond to the height of the socket **611.** As also illustrated in **FIG. 6B****,** the first section **630** of the proximal non-embedded portion, i.e. the tool-engaging section **630,** may similarly to the example in **FIG. 5B****,** be hexagonal. In **FIG. 6B****,** however, the narrower and proximal second section **634** is solid and provided with an external thread.

As illustrated in **FIG. 6C****,** when the insulating inserts have been installed, the proximally directed surface **632** of the fixating part may be substantially flush with the outer surface of the electrically conductive part **300** and the proximal end of the socket **611.** The proximal non-embedded portion **634** of the central shaft projects proximally away from said proximally directed surface **632** of the fixating part.

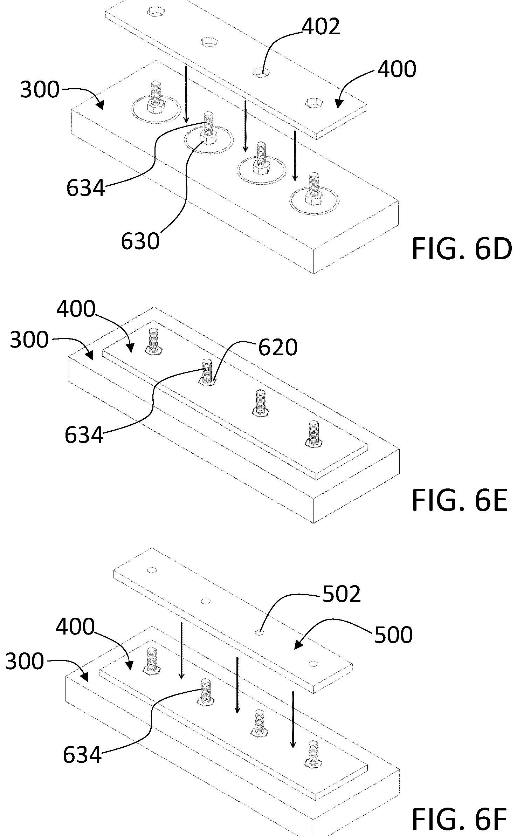

In **FIG. 6D** a TIM piece **400** is schematically illustrated. The TIM piece **400** has hexagonally shaped holes **402.** Each such hexagonally shaped hole **402** matches the hexagonal shape of a tool-engaging section **630** of a respective insulating insert. As mentioned above, the tool-engaging section **630** is a first section **630** which is wider than and located distally of the second section **634.**

In **FIG. 6E** the TIM piece **400** has been received by the proximally directed surface of the fixating part and surrounds the first section (tool-engaging section). The second section **634,** which is externally threaded, protrudes proximally of the first section. Furthermore, the ledge which forms the proximally facing surface **620** of the central shaft part is flush with the TIM piece **400** or is located slightly distally of the TIM piece **400.** The ledge and the proximally facing surface **620** can also be regarded as being formed by a proximal end face of the first section.

In **FIG. 6F** a busbar **500** is schematically illustrated. It has holes **502** which match the shape of the second sections **634.**

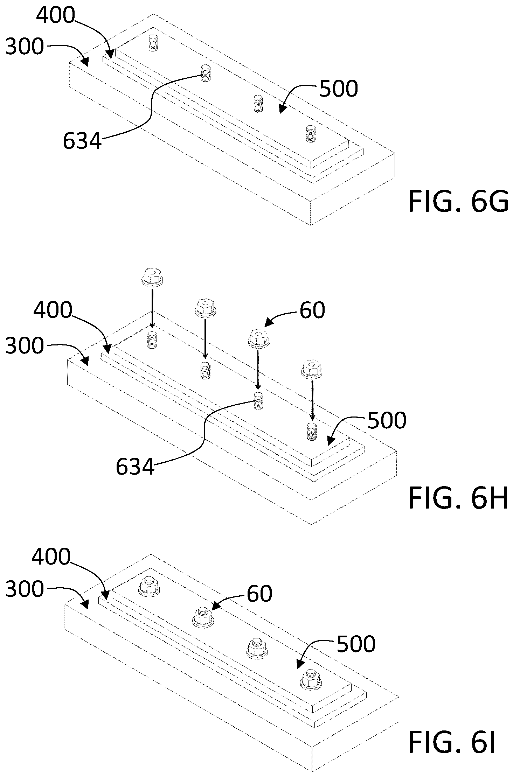

In **FIG. 6G** the busbar **500** has now been received by the proximally facing surface of the central shaft part, such that the threaded second section **634** extends through the hole and protrudes proximally of the busbar **500.**

**FIG. 6H** illustrates that a plurality of flanged nuts **60** may be provided for clamping the busbar **500.** Each nut **60** is internally threaded and configured to engage the external threads of the second section **634** of the central shaft part of a respective insulating insert.

In **FIG. 6I**, each nut **60** has been tightened so that the busbar **500** has been clamped between each nut **60** and the proximally facing surface of the central shaft part of the respective insulating insert. Hereby, a mechanically robust securing of the busbar **500** to the electrically conductive part **300** has been achieved, while also mitigating any risk of the creepage or other transfer of electricity from the busbar **500** to the electrically conductive part **300.**

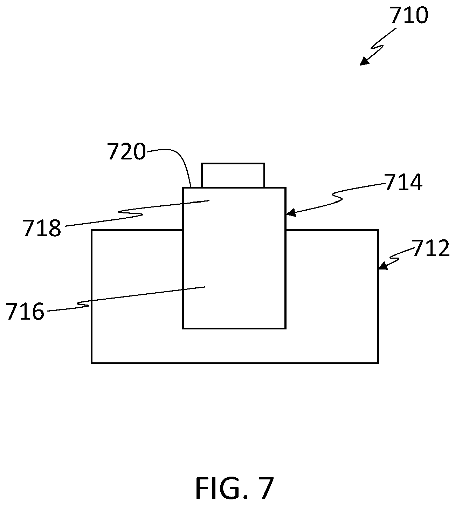

**FIG. 7** is a very schematic illustration of an insulating insert **710** according to yet another example of this disclosure. **FIG. 7** illustrates an insulating insert **710** configured to be inserted into an electrically conductive part of a vehicle for enabling a busbar to become fastened to the electrically conductive part via the insulating insert **710.** The insulating insert comprises a fixating part **712** made of an electrically insulating material. The insulating insert also comprises a central shaft part **714** being partly embedded in and fixated by the fixating part **712.** The central shaft part **714** has a distal portion **716** which is embedded in and fixated by the fixating part **712,** and a proximal non-embedded portion **718** which extends from the embedded distal portion **716** in a proximal direction away from the fixating part **712.** The proximal non-embedded portion **718** of the central shaft part **714** has a proximally facing surface **720** which is configured to support a busbar. The busbar may, in at least some examples, be welded to the central shaft part **714.** In other examples, the central shaft part **714** may form part of a screw joint to cooperate with another part for clamping the busbar to the central shaft part **714.**

In the following, some examples of the insulating insert and related aspects of this disclosure will be presented.

Example 1: An insulating insert configured to be inserted into an electrically conductive part of a vehicle for enabling a busbar to become fastened to the electrically conductive part via the insulating insert, the insulating insert comprising:
- a fixating part made of an electrically insulating material, and
- a central shaft part being partly embedded in and fixated by the fixating part,

wherein the central shaft part has a distal portion which is embedded in and fixated by the fixating part, and a proximal non-embedded portion which extends from the embedded distal portion in a proximal direction away from the fixating part,
wherein the proximal non-embedded portion of the central shaft part has a proximally facing surface which is configured to support a busbar.

Example 2: The insulating insert of example 1, wherein the central shaft part has its main direction of extension in an axial direction, both proximally and distally, wherein the distal portion of the central shaft part comprises a radially extending anchoring section, wherein the distal portion of the central shaft part is embedded in the fixating part in such a way that electrically insulating material of the fixating part is present proximally of the radially extending anchoring section.

Example 3: The insulating insert of any of examples 1-2, wherein the central shaft part is configured to form part of a screw joint, wherein the central shaft part is configured to receive another part of the screw joint, such as a bolt or a nut, so as to allow the busbar to be clamped between said another part of the screw joint and said proximally facing surface.

Example 4: The insulating insert of example 3, wherein the central shaft part comprises a blind bore having a proximal open end and a distal closed end, wherein the blind bore is provided with internal threading and is configured to receive through said proximal open end a bolt provided with mating external threading, so as to allow the busbar to be clamped between a head of the bolt and said proximally facing surface.

Example 5: The insulating insert of example 3, wherein an enveloping surface of the proximal non-embedded portion of the central shaft part is provided with external threading located proximally of said proximally facing surface, wherein the external threading is configured to receive a nut provided with mating internal threading, so as to allow the busbar to be clamped between the nut and said proximally facing surface.

Example 6: The insulating insert of any of examples 1-5, wherein the central shaft part is made in one piece.

Example 7: The insulating insert of any of examples 1-6, wherein the insulating insert is configured to receive a piece of thermal interface material (TIM piece) provided with a hole such that a proximally directed surface of the fixating part contacts the TIM piece and such that the proximal non-embedded portion of the central shaft part extends inside the hole of the TIM piece and is circumferentially surrounded by the TIM piece,
wherein said proximally facing surface is configured to support a busbar such that the busbar becomes arranged proximally of the received TIM piece.

Example 8: The insulating insert of example 7, wherein the proximal non-embedded portion has a first section configured to extend inside the hole of the TIM piece and to be circumferentially surrounded by the TIM piece, and a second section configured to extend inside of a hole of the busbar supported by said proximally facing surface of the proximal non-embedded portion, wherein the first section is located distally of, and is wider than, the second section.

Example 9: The insulating insert of any of examples 1-8, wherein the distal portion of the central shaft part comprises radially extending fin sections presenting planar torque-transmitting surfaces extending in proximal-distal directions inside the fixating part, wherein a torque applied to the proximal non-embedded portion is transmitted by the radially extending fin sections to the fixating part.

Example 10: The insulating insert of any of examples 1-9, wherein the proximal non-embedded portion of the central shaft part comprises a tool-engaging section for enabling a tool to be engaged for screwing the insulating insert into an electrically conductive part of the vehicle.

Example 11: The insulating insert of any of examples 1-10, wherein the insulating insert has a threaded cylindrical enveloping surface for enabling the insulating insert to be screwed into a threaded cavity of an electrically conductive part of a vehicle.

Example 12: The insulating insert of example 11, wherein said threaded cylindrical enveloping surface is a threaded cylindrical enveloping surface of the fixating part.

Example 13: The insulating insert of any of examples 1-11, further comprising a cup-shaped socket, wherein the fixating part is provided in and fixated to the socket, wherein the proximal non-embedded portion projects proximally beyond a proximal end of the socket.

Example 14: The insulating insert of example 13 when dependent on example 11, wherein said threaded cylindrical enveloping surface is a threaded cylindrical enveloping surface of the socket.

Example 15: The insulating insert of any of examples 1-14, wherein the electrically insulating material of the fixating part is a resin or a plastic material, for example reinforced with fibers, such as glass fibers.

Example 16: The insulating insert of any of examples 1-15, wherein the electrically insulating material of the fixating part is injection molded onto the distal portion of the central shaft part.

Example 17: The insulating insert of any of examples 1-16, wherein the central shaft part is made of metal.

Example 18: The insulating insert of any of examples 1-17, wherein the central shaft part is formed by a metal stud, such as copper stud, to which a busbar is weldable.

Example 19: The insulating insert of any of examples 1-18, wherein the distal portion of the central shaft part is embedded in the fixating part in such a way that the electrically insulating material of the fixating part is present both circumferentially and distally of the distal portion of the central shaft part.

Example 20: A vehicle comprising the insulating insert according to any of examples 1-19.

Example 21: An insulating insert arrangement, comprising:
- the insulating insert according to any of examples 1-19, and
- a joint part, such as a bolt or a nut,
wherein the central shaft part is configured to receive the joint part to form a screw joint, so as to allow the busbar to be clamped between said joint part and said proximally facing surface.

Example 22: A vehicle comprising the insulating insert arrangement according to example 21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An insulating insert configured to be inserted into an electrically conductive part of a vehicle for enabling a busbar to become fastened to the electrically conductive part via the insulating insert, the insulating insert comprising:
- a fixating part made of an electrically insulating material, and
- a central shaft part being partly embedded in and fixated by the fixating part,
wherein the central shaft part has a distal portion which is embedded in and fixated by the fixating part, and a proximal non-embedded portion which extends from the embedded distal portion in a proximal direction away from the fixating part,
wherein the proximal non-embedded portion of the central shaft part has a proximally facing surface which is configured to support a busbar.

2. The insulating insert of claim 1, wherein the central shaft part has its main direction of extension in an axial direction, both proximally and distally, wherein the distal portion of the central shaft part comprises a radially extending anchoring section, wherein the distal portion of the central shaft part is embedded in the fixating part in such a way that electrically insulating material of the fixating part is present proximally of the radially extending anchoring section.

3. The insulating insert of any of claims 1-2, wherein the central shaft part is configured to form part of a screw joint, wherein the central shaft part is configured to receive another part of the screw joint, such as a bolt or a nut, so as to allow the busbar to be clamped between said another part of the screw joint and said proximally facing surface.

4. The insulating insert of claim 3, wherein the central shaft part comprises a blind bore having a proximal open end and a distal closed end, wherein the blind bore is provided with internal threading and is configured to receive through said proximal open end a bolt provided with mating external threading, so as to allow the busbar to be clamped between a head of the bolt and said proximally facing surface.

5. The insulating insert of claim 3, wherein an enveloping surface of the proximal non-embedded portion of the central shaft part is provided with external threading located proximally of said proximally facing surface, wherein the external threading is configured to receive a nut provided with mating internal threading, so as to allow the busbar to be clamped between the nut and said proximally facing surface.

6. The insulating insert of any of claims 1-5, wherein the central shaft part is made in one piece.

7. The insulating insert of any of claims 1-6, wherein the insulating insert is configured to receive a piece of thermal interface material (TIM piece) provided with a hole such that a proximally directed surface of the fixating part contacts the TIM piece and such that the proximal non-embedded portion of the central shaft part extends inside the hole of the TIM piece and is circumferentially surrounded by the TIM piece,
wherein said proximally facing surface is configured to support a busbar such that the busbar becomes arranged proximally of the received TIM piece.

8. The insulating insert of claim 7, wherein the proximal non-embedded portion has a first section configured to extend inside the hole of the TIM piece and to be circumferentially surrounded by the TIM piece, and a second section configured to extend inside of a hole of the busbar supported by said proximally facing surface of the proximal non-embedded portion, wherein the first section is located distally of, and is wider than, the second section.

9. The insulating insert of any of claims 1-8, wherein the distal portion of the central shaft part comprises radially extending fin sections presenting planar torque-transmitting surfaces extending in proximal-distal directions inside the fixating part, wherein a torque applied to the proximal non-embedded portion is transmitted by the radially extending fin sections to the fixating part.

10. The insulating insert of any of claims 1-9, wherein the proximal non-embedded portion of the central shaft part comprises a tool-engaging section for enabling a tool to be engaged for screwing the insulating insert into an electrically conductive part of the vehicle.

11. The insulating insert of any of claims 1-10, wherein the insulating insert has a threaded cylindrical enveloping surface for enabling the insulating insert to be screwed into a threaded cavity of an electrically conductive part of a vehicle.

12. The insulating insert of claim 11, wherein said threaded cylindrical enveloping surface is a threaded cylindrical enveloping surface of the fixating part.

13. The insulating insert of any of claims 1-11, further comprising a cup-shaped socket, wherein the fixating part is provided in and fixated to the socket, wherein the proximal non-embedded portion projects proximally beyond a proximal end of the socket.

14. The insulating insert of claim 13 when dependent on claim 11, wherein said threaded cylindrical enveloping surface is a threaded cylindrical enveloping surface of the socket.

15. A vehicle comprising the insulating insert according to any of claims 1-14.
